# EUROPEAN PATENT APPLICATION

(11) **EP 2 493 105 A1**
(43) Date of publication of application: **29.08.2012**
(21) Application number: 10832600.0
(22) Date of filing: 26.10.2010
(51) Int. Cl.: H04L 1/00, H04L 1/16

(54) **METHOD AND SYSTEM FOR RECOVERING LOST MEDIA DATA PACKETS**

(30) Priority: 25.11.2009 CN 200910224255
(71) Applicant: ZTE Corporation, Shenzhen, Guangdong 518057 (CN)
(72) Inventor: HUANG, Yuxuan, Guangdong 518057 (CN)
(74) Representative: Thul, Stephan
(86) International application number: PCT/CN2010/078111
(87) International publication number: WO 2011/063693

(57) **Abstract**

The present invention discloses a method for recovering lost media data packets, and the method includes: a stream media server sending and buffering a media data stream; a client receiving and buffering the media data stream, and sending a negative-acknowledge (NACK) message to the stream media server when the client detects that the buffered media data stream has lost media data packets, wherein, the NACK message carries packet loss information of the media data stream; according to the packet loss information of the media data stream carried in the received NACK message, the stream media server setting forward error correction (FEC) coding redundancy and acquiring the media data packets needing to be recovered from the media data stream buffered in the stream media server itself, encoding the media data packets needing to be recovered into FEC data according to the FEC coding redundancy, and sending the FEC data to the client; with combination of the received FEC data and the media data stream buffered in the client itself, the client recovering the lost media data packets in the media data stream. The present invention also discloses a system for recovering the lost media data packets. With the present invention, network bandwidth can be saved and the CPU load of the stream media server can be reduced.

## Description

### Technical Field

The present invention relates to lost packet recovery techniques in the field of interactive Internet Protocol Television (IPTV), and more especially, to a method and system for recovering lost media packets.

### Background of the Related Art

In the IPTV service, the quality of transmitting the media data packets from the stream media server to the client directly affects the user's video viewing experience. In the case that there are media packets lost during the transmission, the video screen might pause or decode error, which seriously affects the user experience. Therefore, how to ensure the transmission quality of the media packets in order to provide users with high-qualified video viewing experience is a key technical problem faced in the field of IPTV.

The conventional Transport Control Protocol (TCP) transmission mode provides automatic lost packet retransmission, but its lost packet retransmission mechanism is essential, that is, if a data packet is lost, the entire transmission process will be blocked until the packet transmission is completed, and therefore the TCP transmission mode is not suitable for transmission of real-time stream media. In contrast, the User Datagram Protocol (UDP) transmission mode is more suitable for transmission of real-time stream media. When the IPTV system uses the UDP transmission mode, there are two common lost packet recovery techniques, retransmission technique and forward error correction (FEC) technique. The overhead is relatively limited when the retransmission technique is used, because only the lost media data packets are retransmitted; however, the accompanying relevant delay is large: more lost packets, more delay, therefore, there might be the case that although the retransmission of the media data packet is complete, it is already outdated. With the FEC technique, the stream media server continues to send the FEC data at the same time of sending the media data stream, and the client can reconstruct the lost media data packets according to the FEC data, so there is a relatively good real time; however, a fixed bandwidth consumption is brought when the FEC data are sent continuously, especially in the case that the network condition is relatively good, despite the fact that there is no packet loss or the probability of packet loss is small, there is still a fixed bandwidth consumption.

### Summary of the Invention

In view of this, the main purpose of the present invention is to provide a method and system for recovering lost media packets to save network bandwidth and reduce central processing unit (CPU) load of a stream media server.

To achieve the aforementioned purpose, the technical solution of the present invention is accomplished as follows.

A method for recovering lost media data packets, comprising:
a stream media server sending and buffering a media data stream;
a stream media server sending and buffering a media data stream;
a client receiving and buffering the media data stream, and sending a negative-acknowledge (NACK) message to the stream media server when the client detects that the buffered media data stream has lost media data packets, wherein, the NACK message carries packet loss information of the media data stream;
according to the packet loss information of the media data stream carried in the received NACK message, the stream media server setting forward error correction (FEC) coding redundancy and acquiring the media data packets needing to be recovered from the media data stream buffered in the stream media server itself, encoding the media data packets needing to be recovered into FEC data according to the FEC coding redundancy, and sending the FEC data to the client;
with combination of the received FEC data and the media data stream buffered in the client itself, the client recovering the lost media data packets in the media data stream.

After the client detects that the buffered media data stream has lost media data packets, said method further comprises:
the client starting a preset packet loss detection timer, and sending the NACK message to the stream media server if detecting that the lost media packets still have not been received when the packet loss detection timer expires.

After detecting that the lost media packets still have not been received, said method further comprises:
the client judging whether there are FEC data, able to recover the lost media packets, existing in the client itself; if yes, recovering the lost media packets in the media data stream according to the FEC data; otherwise, sending the NACK message to the stream media server.

Said setting the FEC coding redundancy is also based on FEC algorithm and an actually allowed upper limit of network redundancy.
After encoding the media data packets needing to be recovered into FEC data and sending the FEC data to the client, the method further comprises:
with combination of subsequently sent media data stream and the FEC coding redundancy, the stream media server generating the FEC data and sending to the client.

A system for recovering lost media packets, comprising a stream media server and a client, wherein, the stream media server comprises: a media data transmitter module, a first media data buffer module, a packet loss compensation module and a FEC data encoding module; the client comprises: a media data receiver module, a second media data buffer module, a packet loss reporting module, and a FEC recovery module; wherein,
the media data transmitter module is configured to send a media data stream to the media data receiver module;
the first media data buffer module is configured to buffer the media data stream sent by the media data transmitter module;
the media data receiver module is configured to receive the media data stream;
the second media data buffer module is configured to buffer the media data stream received by the media data receiver module, and when detecting that the buffered media data stream has lost media packets, trigger the packet loss reporting module;
the packet loss reporting module is configured to send a negative-acknowledge NACK message to the packet loss compensation module, wherein, the NACK message carries packet loss information of the media data stream;
the packet loss compensation module is configured to set forward error correction FEC coding redundancy according to the packet loss information of the media data stream carried in the received NACK message, and send the FEC coding redundancy and the packet loss information of the media data stream to the FEC data encoding module;
the FEC data encoding module is configured to obtain the media data packets needing to be recovered from the first media data buffer module according to the packet loss information of the received media data stream, and encode the media data packets needing to be recovered into the FEC data according to the received FEC coding redundancy, and send the FEC data to the FEC recovery module;
the FEC recovery module is configured to recover the lost media packets in the media data stream with combination of the received FEC data and the media data stream buffered in the second media data buffer module.

Wherein, the second media data buffer module is further configured to firstly start a preset packet loss detection timer after detecting that the buffered media data stream has lost media packets, and if detecting that the lost media packets still have not been received when the packet loss detection timer expires, trigger the packet loss reporting module.
Wherein, the second media data buffer module is further configured to trigger the FEC recovery module after detecting that the lost media data packets have not been received yet;
the FEC recovery module is further configured to judge whether itself has the FEC data able to recover the lost media packets; if yes, recover the lost media packets in the media data stream according to the FEC data; otherwise, trigger the packet loss reporting module.

It can be seen from the above technical solution that, compared with the prior art, in the present invention, the FEC data that is used for recovering the lost packet are sent only when the media data stream has lost packets, thus saving the network bandwidth; moreover, since the FEC data does not need to be sent in real time, accordingly, the FEC data is no needed to be generated in real time either, thus reducing the CPU load of the stream media server. In addition, in the present invention, the FEC technology is used to recover the lost packets, thus it can obtain relatively high media data transmission quality and provide the users with high-qualified video viewing experience.

### Brief Description of Drawings

FIG. 1 is a flow chart of a method for recovering lost media packets in accordance with the present invention.
FIG. 2 is a structural diagram of a system for recovering lost media packets in accordance with the present invention.

### Preferred Embodiments of the Present Invention

The technical solution of the present invention will be described in detail in the following with combination of the accompanying drawings.

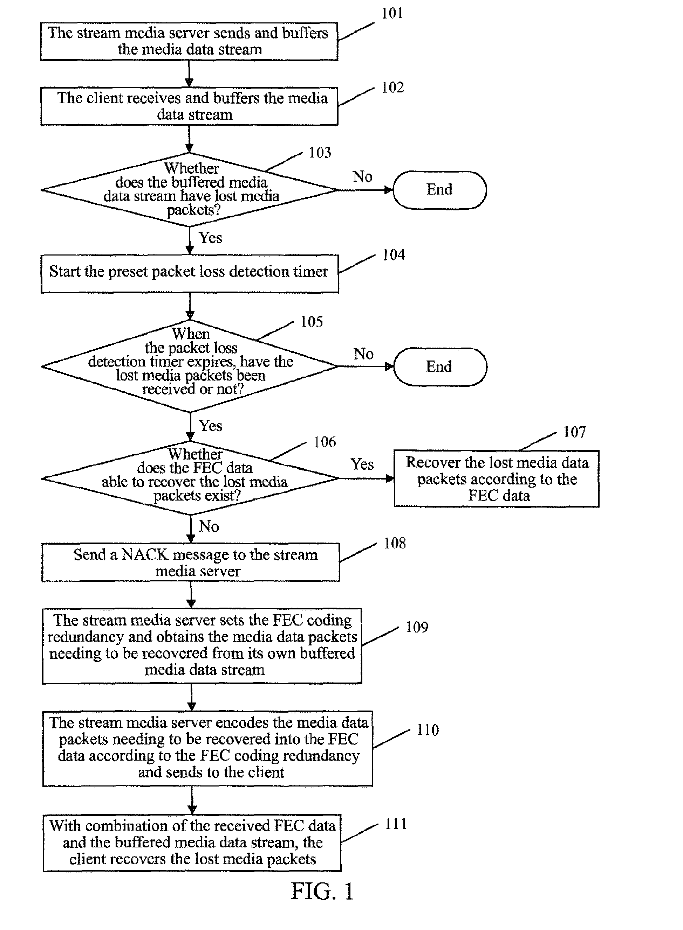

As shown in FIG. 1, the method for recovering lost media data packets in the present invention comprises the following steps.

Step 101, the stream media server sends and buffers the media data stream.

The media data stream consists of a number of continuous media data packets.

Step 102, the client receives and buffers the media data stream.

Steps 103 to 104, the client detects whether the buffered media data stream has lost media packets or not, if not, ends the current process; otherwise, starts the preset packet loss detection timer.

Wherein, how to detect whether the media data stream has lost packets or not is an existing technology and is not discussed here.

Step 105, when the packet loss detection timer expires, the client detects whether the lost media packets have been received or not, if not, proceed to step 106; otherwise, it indicates that there are no lost media packets, and ends the current process.

Since the order of the packets might be wrong in the UDP transmission mode, that is, the media data packets in the media data stream are not arrived in sequence. For example, suppose the media data stream contains four media packets whose serial numbers are 1, 2, 3 and 4, when the step 103 is carried out, the client has received the media data packets whose serial numbers are 1, 2 and 4 respectively, but the media data packet whose serial number is 3 is not received, therefore, the packet loss is detected in step 103. However, after starting the packet loss detection timer, the client receives the media data packet whose serial number is 3, so it is evident to find that the media data stream has no lost packet when the diction is performed again when the packet loss detection timer expires. Therefore, setting the packet loss detection timer can prevent this case from happening.

In addition, the timing of the packet loss detection timer can be set according to actual needs.

Steps 106 to 108, the client judges whether itself has the FEC data able to recover the lost media packets; if yes, recovers the lost media packets in the media data stream according to the FEC data; otherwise, sends a NACK message to the stream media server, and the NACK message carries the packet loss information of the media data stream.

Wherein, how to recover the lost media data packets according to the FEC data is a technique in the prior art and is not discussed here.

In addition, the packet loss information of the media data stream means which media data packets in the N continuous media data packets are specifically lost.

Step 109, after the stream media server receives the NACK message, it sets the FEC coding redundancy according to the packet loss information of the media data stream carried therein, and obtains the media data packets needing to be recovered from its own buffered media data stream. Wherein, the media data packets needing to be recovered are the lost media data packets.

Since different FEC algorithms might produce different impacts on the effect of the lost packet recovery, and in consideration of the actual needs, when setting the FEC coding redundancy, it generally needs to comprehensively consider the actually used FEC algorithm and the actually allowed upper limit of network redundancy.

Moreover, the FEC coding redundancy is adaptive, and it is able to balance between the lost packet recovery and the network additional bandwidth occupancy. For example, suppose the packet loss rate of the media data stream is 2%, the FEC coding redundancy can be set to 3%, thus there are enough FEC data to recover the lost data packets; moreover, the FEC data does not take up too much additional bandwidth, because the set value of the FEC coding redundancy is not high.

In addition, if the media data stream buffered in the stream media server has been released before detecting media data lost and need to be recover, the lost packet recovery fails, and ends the current process.

Step 110, the stream media server encodes the media packets needing to be recovered into the FEC data according to the FEC coding redundancy and sends to the client. Wherein, the media data packets needing to be recovered refer to the lost media data packets.

If the sent media data stream has lost packet, the subsequently sent media data stream generally has the case of packet loss, therefore, combined with the subsequently sent media data stream and the FEC coding redundancy, generate the FEC data in a certain duration and send the data to the client, wherein, the FEC data corresponds to the subsequently sent media data stream. Thus, when the subsequently sent media data stream loses packets, the client can recover the lost media packets according to the FEC data without communication to the server, thus ensuring the recovery quality and the network utilization. In addition, said duration can be set as desired.

Step 111, with combination of the received FEC data and the buffered media data stream in itself, the client recovers the lost media packets in the media data stream.

If the media data stream buffered in the client has been released before the FEC data are received, the lost packet recovery fails, and ends the current process.

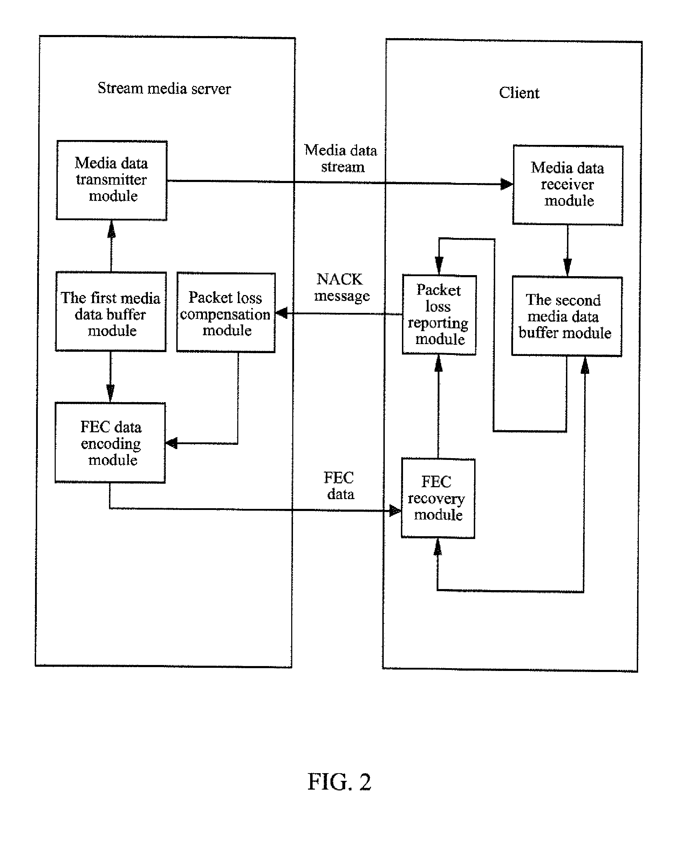

To achieve the aforementioned method, the present invention correspondingly provides a system for recovering the lost media packets, as shown in FIG. 2, the system comprises a stream media server and a client, wherein, the stream media server comprises: a media data transmitter module, a first media data buffer module, a packet loss compensation module and a FEC data encoding module; the client comprises: a media data receiver module, a second media data buffer module, a packet loss reporting module, and a FEC recovery module; wherein,
the media data transmitter module is configured to send a media data stream to the media data receiver module;
the first media data buffer module is configured to buffer the media data stream sent by the media data transmitter module;
the media data receiver module is configured to receive the media data stream;
the second media data buffer module is configured to buffer the media data stream received by the media data receiver module, and when detecting that the buffered media data stream has lost media packets, trigger the packet loss reporting module.

Preferably, the second media data buffer module is used to firstly start a preset packet loss detection timer before triggering the packet loss reporting module, and when the packet loss detection timer expires, trigger the packet loss reporting module if detecting that the lost media packets still have not been received.

Preferably, the second media data buffer module is used to trigger the FEC recovery module after detecting that the lost media data packets have not been received;

The FEC recovery module is further used to judge whether itself has the FEC data able to recover the lost media packets; if yes, recover the lost media packets in the media data stream according to the FEC data; otherwise, trigger the packet loss reporting module.

The system further comprises: the packet loss reporting module, which is used to send a NACK message to the packet loss compensation module, and the NACK message carries the packet loss information of the media data stream. Wherein, the packet loss information of the media data stream is acquired from the second media data buffer module.

The system further comprises: the packet loss compensation module, which is used to set the FEC coding redundancy according to the packet loss information of the media data stream carried in the received NACK message, and to send the FEC coding redundancy and the packet loss information of the media data stream to the FEC data encoding module.

The system further comprises: the FEC data encoding module, which is used to obtain the media data packets needing to be recovered from the first media data buffer module according to the packet loss information of the received media data stream, and encode the media data packets needing to be recovered into the FEC data according to the received FEC coding redundancy, and send the FEC data to the FEC recovery module;
the FEC recovery module, which is used to recover the lost media packets in the media data stream with combination of the received FEC data and the media data stream buffered in the second media data buffer module.

The above description is only the preferred embodiments of the present invention and is not intended to limit the protection scope of the present invention.

## Claims

1. A method for recovering lost media data packets, wherein, the method comprises:
a stream media server sending and buffering a media data stream;
a client receiving and buffering the media data stream, and sending a negative-acknowledge NACK message to the stream media server when the client detects that the buffered media data stream has lost media data packets, wherein, the NACK message carries packet loss information of the media data stream;
according to the packet loss information of the media data stream carried in the received NACK message, the stream media server setting forward error correction FEC coding redundancy and acquiring the media data packets needing to be recovered from the media data stream buffered in the stream media server itself, encoding the media data packets needing to be recovered into FEC data according to the FEC coding redundancy, and sending the FEC data to the client;
with combination of the received FEC data and the media data stream buffered in the client itself, the client recovering the lost media data packets in the media data stream.

2. The method for recovering the lost media data packets of claim 1, wherein, after the client detects that the buffered media data stream has lost media data packets, said method further comprises:
the client starting a preset packet loss detection timer, and sending the NACK message to the stream media server if detecting that the lost media packets still have not been received when the packet loss detection timer expires.

3. The method for recovering the lost media data packets of claim 2, wherein, after detecting that the lost media packets still have not been received, said method further comprises:
the client judging whether there are enough FEC data, able to recover the lost media packets, existing in the client itself; if yes, recovering the lost media packets in the media data stream according to the FEC data; otherwise, sending the NACK message to the stream media server.

4. The method for recovering the lost media data packets of claim 1, 2 or 3, wherein, said setting the FEC coding redundancy is also based on FEC algorithm and an actually allowed upper limit of network redundancy.

5. The method for recovering the lost media data packets of claim 1, 2 or 3, wherein, after encoding the media data packets needing to be recovered into FEC data and sending the FEC data to the client, the method further comprises:
with combination of subsequently sent media data stream and the FEC coding redundancy, the stream media server generating the FEC data and sending to the client.

6. A system for recovering lost media packets, comprising a stream media server and a client, wherein, the stream media server comprises: a media data transmitter module, a first media data buffer module, a packet loss compensation module and a FEC data encoding module; the client comprises: a media data receiver module, a second media data buffer module, a packet loss reporting module, and a FEC recovery module; wherein,
the media data transmitter module is configured to send a media data stream to the media data receiver module;
the first media data buffer module is configured to buffer the media data stream sent by the media data transmitter module;
the media data receiver module is configured to receive the media data stream;
the second media data buffer module is configured to buffer the media data stream received by the media data receiver module, and when detecting that the buffered media data stream has lost media packets, trigger the packet loss reporting module;
the packet loss reporting module is configured to send a negative-acknowledge NACK message to the packet loss compensation module, wherein, the NACK message carries packet loss information of the media data stream;
the packet loss compensation module is configured to set forward error correction FEC coding redundancy according to the packet loss information of the media data stream carried in the received NACK message, and send the FEC coding redundancy and the packet loss information of the media data stream to the FEC data encoding module;
the FEC data encoding module is configured to obtain the media data packets needing to be recovered from the first media data buffer module according to the packet loss information of the received media data stream, and encode the media data packets needing to be recovered into the FEC data according to the received FEC coding redundancy, and send the FEC data to the FEC recovery module;
the FEC recovery module is configured to recover the lost media packets in the media data stream with combination of the received FEC data and the media data stream buffered in the second media data buffer module.

7. The system for recovering the lost media data packets of claim 6, wherein, the second media data buffer module is further configured to firstly start a preset packet loss detection timer after detecting that the buffered media data stream has lost media packets, and when the packet loss detection timer expires, , trigger the packet loss reporting module if detecting that the lost media packets still have not been received.

8. The system for recovering the lost media data packets of claim 7, wherein, the second media data buffer module is further configured to trigger the FEC recovery module after detecting that the lost media data packets have not been received yet;
the FEC recovery module is further configured to judge whether itself has the FEC data able to recover the lost media packets; if yes, recover the lost media packets in the media data stream according to the FEC data; otherwise, trigger the packet loss reporting module.
